(19) Europäisches Patentamt
European Patent Office
Office européen des brevets

(11) Veröffentlichungsnummer: **0 027 942**
**B1**

(12) # EUROPÄISCHE PATENTSCHRIFT

(45) Veröffentlichungstag der Patentschrift: 16.03.83

(51) Int. Cl.³: C 03 C 25/02, C 08 G 59/42

(21) Anmeldenummer: 80106198.7

(22) Anmeldetag: 11.10.80

(54) **Schlichtemittel für Glasfasern, damit beschlichtete Glasfasern und Verfahren zu ihrer Herstellung sowie Glasfaserverbundwerkstoffe.**

(30) Priorität: 25.10.79 DE 2943128

(43) Veröffentlichungstag der Anmeldung: 06.05.81 Patentblatt 81/18

(45) Bekanntmachung des Hinweises auf die Patenterteilung: 16.03.83 Patentblatt 83/11

(84) Benannte Vertragsstaaten: BE DE FR GB IT NL

(56) Entgegenhaltungen:
DE-A-1 496 601
DE-A-1 496 630
DE-A-1 669 584
DE-B-1 111 141
US-A-3 827 230
US-A-3 997 306
US-A-4 049 597
US-A-4 110 094

(73) Patentinhaber: BAYER AG, Zentralbereich Patente, Marken und Lizenzen, D-5090 Leverkusen 1, Bayerwerk (DE)

(72) Erfinder: Zabrocki, Karl, Dr., Edelfalter 33, D-4044 Büttgen (DE)
Erfinder: Hentschel, Karl-Heinz, Dr., Heckschenstrasse 89, D-4150 Krefeld 10 (DE)
Erfinder: Eichenhofer, Kurt-Wilhelm, Dr., Heymannstrasse 38, D-5090 Leverkusen 1 (DE)
Erfinder: Schartau, Wolfgang, Dr., Zum Hahnenberg 20, D-5068 Odenthal (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Schlichtemittel für Glasfasern, damit beschlichtete Glasfasern und Verfahren zu ihrer Herstellung sowie Glasfaserverbundwerkstoffe

Die vorliegende Erfindung betrifft wässrige Schlichtemittel für Glasfasern.

Es ist bekannt, dass die grundsätzlichen Schwierigkeiten beim Einbau bzw. bei der Verbindung von Glasfasern mit organischen polymeren Materialien einmal darauf zurückzuführen sind, dass die Glasfasern vollständig glatte, stangenähnliche Elemente sind. Eine weitere Schwierigkeit besteht darin, dass die Oberfläche der Glasfasern hydrophil ist, was zur Bildung eines dünnen, durch Hydratation fest gebundenen Wasserfilms auf den Glasfaseroberflächen führt. Das Wasser ist in der Lage, jede Bindung, ob chemisch oder physikalisch, zu verhindern, die sich sonst zwischen den Glasfaseroberflächen und dem organischen polymeren Material, mit dem die Glasfasern kombiniert werden sollen, bilden könnte.

Um die Schwierigkeiten und Probleme bei dem Verbinden von Glasfasern mit organischen polymeren Materialien, wie oben beschrieben, klein zu halten und eine sichere Bindung zwischen den Glasfasern und organischen polymeren Materialien zu begünstigen und herbeizuführen, werden die Glasfasern beschlichtet, bevorzugt bei ihrer Formgebung während des Faserziehprozesses, und zwar mit einer mit dem zu verstärkenden Polymer kompatiblen und die Haftungseigenschaften der Glasfaser verbessernden Schlichte, und dann zu Strängen, Garnen, Rovings oder Geweben verarbeitet.

Neben der grundsätzlichen Aufgabe der Schlichte: Schaffung eines Verbundes zwischen Glasfaser und Matrix, hat das wässrige Schlichtemittel zum Ziel, die Verarbeitbarkeit der Glasfasern in allen Verarbeitungsstufen der Praxis sicherzustellen, d.h. Schutz der Filamente, Fäden und Stränge gegenüber jeglicher Art von Reibungsvorgängen und mechanischer Faserbeanspruchung durch Schmierung, Umhüllung und Zusammenhalt der Filamente, Fäden und Stränge.

Die Schlichte ist im allgemeinen eine wässrige Lösung oder Dispersion und besteht in der Regel aus fünf Bestandteilen:

) Filmbildner oder Klebemittel
) Gleitmittel oder Schmiermittel
) Haftvermittler
) Hilfstoff, z.B. Emulgatoren, Antistatika,
  Wasser.

Der Filmbildner bzw. das Klebemittel hat die Aufgabe, einen Film auf der Glasoberfläche zu bilden, der die Glasfaser-Filamente, Fäden und Stränge durch Umhüllung und gegenseitiges Verkleben gegen mechanische Beanspruchung schützt, d.h. als wesentlicher Schlichtebestandteil die Verarbeitbarkeit herbeizuführen, und die Kompatibilität zwischen der Faser und dem organischen Polymer zu verbessern. Für die Verträglichkeit des Polymeren mit der Glasfaser und für die mechanischen Eigenschaften des aus der Glasfaser und dem organischen Polymeren bestehenden Laminats ist daher der chemische Aufbau deses Bindemittels von entscheidender Bedeutung.

Wegen der erforderlichen guten Verträglichkeit zwischen der geschlichteten Glasfaser und den organischen Polymeren werden im allgemeinen solche Materialien als Filmbildner verwendet, die in ihrem chemischen Aufbau dem mit der Glasfaser zu verstärkenden Polymeren ähnlich sind.

So wird beispielsweise Polypropylen als Filmbildner auf Glasfasern verwendet, die in Polyolefine eingebaut werden (DT-A-2 360 698).

Zum Beschichten von Glasfasern wurden auch epoxygruppenhaltige Polyester herangezogen. So wird in Plast. Massy 1972 (11), 11–13 ein Beschichtungssystem beschrieben, das aus einem aus Epoxyharzen und oligomeren Polyethylenglykolmaleatphthalaten erhaltenen ungesättigten Epoxypolyester einerseits und Triethylenglykoldimethacrylat andererseits besteht. Dieses System liegt jedoch gelöst in einem organischen Lösungsmittel vor und lässt sich nicht ohne Entzündungsgefahr in unmittelbarer Nähe der über 1000 °C heissen Glasspinndüsen auf die frisch gesponnenen Glasfilamente auftragen.

Aus der DE-A-1 496 601 sind Glasfaserschlichten bekannt, bei denen unter anderem wasserlösliche Epoxidzusammensetzungen aus dem angesäuerten Reaktionsprodukt von einer Epoxidverbindung mit wenigstens zwei Oxirangruppen und einem Monoamin eingesetzt werden.

Die US-A-3 827 230 beschreibt Glasfaserschlichten, die die Reaktionsprodukte eines epoxidierten Esters mit einer Aminoverbindung, einer Glycidoxy-Verbindung oder einer Verbindung mit Carboxylgruppen enthalten.

Wässrige Zusammensetzungen zum Beschichten von Glasfasern mit epoxygruppenhaltigen Polyestern als Filmbildner sind ebenfalls bekannt. In DE-A-1 496 630 und DE-A-1 669 584 wird beschrieben, dass die Umsetzungsprodukte partieller Monoalkoholester von Polycarbonsäuren mit Epoxyverbindungen in wässrigen Beschichtungszusammensetzungen für Glasfasern verwendet werden können. Die beiden Veröffentlichungen offenbaren niedermolekulare Filmbildnerharze, welche jedoch z.T. nicht dispergierbar sind (siehe Vergleichsversuch A). Darüber hinaus wurde nunmehr gefunden, dass eine Vielzahl der dort beschriebenen Filmbildner zu wenig abriebfesten Schlichten sowie zu unzureichenden mechanischen Werten der so gewonnen Laminate, zu Verfärbungen und schlechter Wasserfestigkeit führen.

Der vorliegenden Erfindung lag daher die Aufgabe zugrunde, Glasfaserschlichten bereitzustellen, welche optimale Verträglichkeit zwischen Glasfasern einerseits und Kunstharzen, insbesondere Epoxidharzen oder ungesättigten Polyesterharzen, andererseits herbeiführen sowie ausserdem die Verarbeitungseigenschaften der geschlichteten Glasfasern verbessern. Darüber hinaus sollen die mit den erfindungsgemässen Schlichten behandelten Glasfaser-Kunststoff-Laminate optimale mechanische Eigenschaften, wie z.B. Biegefestigkeiten, aufweisen und diese Eigenschaften trotz länger anhaltender Einwirkung von Wasser über längere Zeit aufrecht erhalten.

Gegenstand der vorliegenden Erfindung sind wässrige Schlichtemittel für Glasfasern, welche als Filmbildner in Wasser emulgierbare, mit Polyethereinheiten und Epoxygruppen modifizierte Polyester enthalten, dadurch gekennzeichnet, dass die modifizierten Polyester 4–13 Gew.-% Polyethylenoxideinheiten mit Molgewichten zwischen 370 und 3000 und 25–50 Gew.-% Polypropylenoxideinheiten mit Molgewichten von 116–2000 einkondensiert enthalten.

Überraschenderweise vereinen die erfindungsgemässen Schlichtezusammensetzungen leichte Dispergierbarkeit in Wasser mit einer hohen Wasserfestigkeit der Kunstharzlaminate, die mit erfindungsgemässen Schlichten überzogene Glasfasern enthalten. Dies ist umso erstaunlicher, als bekannt ist, dass Polyethylenoxidsegmente des Molgewichtsbereiches, wie er der Erfindung zugrundeliegt, eine starke Affinität zu Wasser aufweisen und man daher erwarten musste, dass solche Polyethylenoxidsegmente enthaltende Glasfasern durch eine Art «Dochtwirkung» Wasser in das glasfaserverstärkte Kunstharz hineinziehen würden, und die sich ausbildende Wasserschicht die Haftung zwischen Glasfaser und Kunstharz und somit die mechanische Eigenschaften deutlich verschlechtern müsste.

Die erfindungsgemässen Bereiche sind kritisch, da einerseits eine Verringerung des Polypropylenoxidgehaltes unter den Wert von 25 Gew.-% (Vergleichsversuch C) infolge zu starker Verklebungen der Faser-filamente und -fäden untereinander, sowie durch Einbrechen der Glasfaserlagen in dem «Cake» eine Verarbeitung der Glasfasern zu Rovings verhindert und andererseits eine Erhöhung des Polypropylenoxidgehaltes auf über 50 Gew.-% zu verarbeitungstechnischen Schwierigkeiten der Glasfaserfäden, wie der unerwünschten Bildung von Schlingen und Einbrechen der Glasfaserlagen im «Cake» führt (Vergleichsversuch D).

Um die guten Elektrolyt- und pH-Stabilitäten der erfindungsgemässen Schlichten zu gewährleisten, muss der Polyethylenoxidgehalt bei mindestens 4 Gew.-% liegen (Vergleichsversuch B). Der erfindungsgemässe Bereich von 4–13 Gew.-% Polyethylenoxideinheiten stellt die einzige Spanne dar, innerhalb der einerseits eine ausgezeichnete pH-Stabilität der Schlichte und andererseits eine hohe Wasserfestigkeit der so gewonnenen Laminate gewährleistet ist.

Dass Polyethylenoxid- und Polypropylenoxideinheiten die Eigenschaften der Schlichte erst oberhalb eines Mindestmolekulargewichtes deutlich verbessern, zeigt ein Vergleichsversuch mit einem Mindestmolgewicht der Polyethylenoxideinheiten von 88, der ebenfalls zu Glasfasern führt, die sich nur sehr schlecht verarbeiten lassen infolge von Filamentisierung der Glasfaserfäden im Filamente und Einbrechen der Faserlagen in dem Cake (Vergleichsversuch E).

Die epoxygruppenhaltigen Polyesterharze werden durch Veresterung von gegebenenfalls polyethylenoxid- bzw. polypropylenoxidhaltigen Polyalkoholen und Dicarbonsäuren oder deren veresterungsfähigen Derivaten sowie gegebenenfalls Monocarbonsäuren in an sich bekannter Weise (vgl. z.B. Houben-Weyl, Methoden der Organischen Chemie, Stuttgart, 1963, Bd. 14/2, S. 1–5, 21–23, 40–44; C.R. Martens, Alkyd-Resins, Reinhold Publ. Comp. 1961, Reinhold Plastics Appl. Ser., S. 51–59) bis auf Säurezahlen von 5–50, bevorzugt 10–30 mg KOH/g, und anschliessender Umsetzung mit einer mehr als eine Epoxygruppe im Molekül enthaltenden Verbindung bei Temperaturen zwischen 20 und 200 °C, bevorzugt zwischen 80 und 150 °C, hergestellt. Es ist ebenfalls möglich, Monocarbonsäure und Monoalkohole miteinzusetzen. Die Veresterung und die Epoxyaddition können in einer oder mehreren Stufen durchgeführt werden.

In einer speziellen Herstellungsform der erfindungsgemässen epoxygruppenhaltigen Polyester werden die Dicarbonsäuren und die Polyalkohole bis auf Säurezahlen zwischen 1 und 10 mg KOH/g verestert, dann durch Addition eines Dicarbonsäureanhydrids in die Halbesterform mit Säurezahlen im Bereich 10–50 überführt und schliesslich mit den mehr als eine Epoxygruppe im Molekül enthaltenden Verbindungen zur Reaktion gebracht. Vorteilhaft ist die Wahl solcher Molverhältnisse zwischen der sauren Polyestervorstufe und der Polyepoxidverbindung und solcher Reaktionsbedingungen, dass pro Mol Polyepoxidverbindung ca. 0,8–1,2 äquivalente Epoxygruppen durch Addition an freie Carboxylgruppen der Polyestervorstufe umgesetzt werden und nach der Reaktion noch eine Restsäurezahl von 0,5–20, bevorzugt von 4–10 bleibt.

In einer weiteren speziellen Ausführungsform werden die Säurezahl und Alkoholkomponenten zunächst bis Säurezahlen im Bereich 10–40 verestert und danach mit den mehr als eine Epoxygruppe pro Molekül enthaltenden Verbindungen umgesetzt.

Entscheidend ist jedoch bei allen Herstellungsmethoden, dass das fertige Filmbildnerharz restliche freie Epoxygruppen aufweisen muss.

Das erfindungsgemässe Filmbildnerharz besteht aus dem Umsetzungsprodukt von 3–40 Gew.-% Epoxyverbindungen mit mehr als einer Epoxygruppe im Molekül und 97–60 Gew.-% eines polyethermodifizierten Polyesters und weist einen Restgehalt an Epoxid-Sauserstoff von 0,02–0,7 Gew.-%, bevorzugt von 0,05–0,5 Gew.-% auf.

Zur Herstellung des Polyesterpräkondensats werden bevorzugt verwendet: als Polyalkohole aliphatische, cycloaliphatische und/oder aromatische Polyole mit 2 bis 6 an nichtaromatische C-Atome gebundenen alkoholischen OH-Gruppen und 2 bis 24 C-Atomen pro Molekül. Neben den Polyalkoholen können auch noch bis zu 30 Mol-% Monoalkohole enthalten sein, wie z.B. aliphatische, cycloaliphatische oder araliphatische Monoalkohole oder deren Alkylenoxid-Umsetzungsprodukte. Es können auch Additionsprodukte von Alkylenoxiden mit 2–10 C-Atomen pro Molekül oder von reaktionsfähigen Lactonen, wie z.B. ε-Caprolacton, und solchen Polyolen eingesetzt werden. Als Dicarbonsäuren werden aliphatische, cycloaliphatische, gesättigte oder ungesättigte und/oder aromatische Monocarbonsäure mit 6 bis 24 C-Atomen pro Molekül verwendet. Die Polyethylenoxideinheiten können in das Polyesterpräkondensat in Form von Polyethylenglykol, oxyethylierten Mono-, Di- oder Polyalkoholen, oxyethylierten Mono-, Di- oder Polyphenolen und/oder oxyethylierten Mono-, Di- oder Polycarbonsäure eingebaut werden. Bevorzugt werden dabei Verbindungen mit mindestens zwei alkoholischen Hydroxylgruppen pro Molekül. Besonders bevorzugt werden Polyethylenglykole. Die mittleren Molekulargewichte der in der oben genannten Form vorliegenden Polyethylenoxideinheiten sollen im Bereich 370 bis 3000, bevorzugt zwischen 600 und 3000 liegen.

Analog diesem Vorgehen kann man die Polypropylenoxideinheiten einführen. Bevorzugt werden diese jedoch einkondensiert durch Verwendung von Umsetzungsprodukten von mehrwertigen Phenolen mit 2–50 Mol Propylenoxid pro Mol Phenol.

Als mitzuverwendende Dicarbonsäuren eignen sich aromatische, gesättigte oder ungesättigte, cycloaliphatische, aliphatische Dicarbonsäuren mit 4–12 Kohlenstoffatomen, beispielsweise Phthalsäure, Isophthalsäure, Terephthalsäure, Hexahydrophthalsäure, Hexahydroisophthalsäure, Hexahydroterephthalsäure, Methyl-tetrahydrophthalsäure, Tetrahydrophthalsäure, Endomethylentetrahydrophthalsäure, Endoethylentetrahydrophthalsäure, Tricyclo-[5,2,1,$0^{2,6}$]-decan-dicarbonsäure, Bernsteinsäure, $C_{1-8}$-Alkylbernsteinsäure, $C_{2-8}$-Alkenylbernsteinsäure, Glutarsäure, Adipinsäure, Korksäure, Azelainsäure, Sebacinsäure, Dodecandisäure und Furmarsäure, wobei der Einsatz von Phthalsäure, Isophthalsäure, Hexahydrophthalsäure und Adipinsäure bevorzugt wird. Maleinsäure kann in untergeordneter Menge, höchstens jedoch bis zu 6 Gew.-%, bezogen auf das Trockengewicht des Epoxypolyesters, vorhanden sein.

Die Polyester können durch Einkondensation von bis zu 10 Mol-% Monocarbonsäuren, wie Benzoesäure, Butylbenzoesäure und Hexahydrobenzoesäure oder anderen aliphatischen, cycloaliphatischen gesättigten oder ungesättigten oder aromatischen Monocarbonsäure, in an sich bekannter Weise modifiziert werden. Aber auch die Einkondensation von bis zu 20 Mol-% drei- und vierwertiger Carbonsäure, wie Trimellithsäure und Pyromellithsäure, anstatt der Dicarbonsäure, ist möglich.

Als mehrwertige Alkohole können zweiwertige aliphatische und cycloaliphatische Alkohole mit 2 bis 24 Kohlenstoffatomen, wie Ethylenglykol, Propylenglykole, Diethylenglykol, Dipropylenglykol, Butandiole, Neopentylglykol, Hexandiole, Perhydrobisphenol, Dimethylolcyclohexan und Dimethyloltricyclo-[5,2,1,$0^{2,6}$]-decane, alkoxylierte Bisphenole, sowie dreiwertige Alkohole, wie Glycerin, Trimethylolethan, Trimethylolpropan, Trimethylolhexan, eingesetzt werden. Höherwertige Alkohole, wie Pentaerythrit oder Dipentaerythrit, sowie Mischungen aus mehrwertigen Alkoholen können ebenfalls verwendet werden. Ein Teil der genannten Alkohole liegt vorzugsweise in alkoxylierter Form vor, um den Einbau der erfindungsgemässen Mengen an Polyethylenoxid und Polypropylenoxid in das epoxygruppenhaltige Polyesterharz zu ermöglichen. Die genannten zwei- oder höher-wertigen Alkohole können auch in Form ihrer Umsetzungsprodukte mit reaktionsfähigen Lactonen, wie z.B. E-Caprolacton, verwendet werden.

Die mehr als eine Epoxygruppe pro Molekül enthaltenden Verbindungen können sein:

durch Umsetzung von Polyphenolen, wie z.B. Bisphenol A, oder Novolaken mit Epichlorhydrin gewonnene Epoxyharze, durch Epoxidierung mehrfacher cycloaliphatischer oder aliphatischer Olefine, welche Ester- oder Etherbrücken, enthalten können, gewonnene mehrfache Epoxide, wie z.B. 3,4-Epoxycyclohexylmethyl-3,4-epoxy-cyclohexancarboxylat, Bis-(3,4-Epoxycyclohexylmethyl)-maleat, Bis-(2,3-Epoxycyclopentyl)-ether, Ethylenglykol-bis- (3,4-epoxycyclohexancarboxylat), 1,6-Hexandiol-bis- (3,4-epoxycyclohexancarboxylat), Limonendiepoxid, 1,2,5,6-Diepoxycyclooctan, Dicyclopentadiendiepoxid, Vinylcyclohexendiepoxid, Glycidylester von Polycarbonsäuren, wie z.B. Phthalsäurebisglycidylester, Hexahydrobenzoesäurebisglycidylester, Tetrahydrophthalsäurebisglycidylester, 4,5-Epoxy-tetrahydrophthalsäurebisglycidylester, Epoxyderivate stickstoffhaltiger Heterocyclen, wie z.B. Tris-glycidyl-cyanurat, Trisglycidylisocyanurat oder Bisglycidylhydantoine.

Besonders vorteilhaft ist es. Ausgangsmaterialien und Herstellungsbedingungen derart auszuwählen, dass die fertigen epoxygruppenhaltigen Polyester bestimmte Gehalte an freien restlichen Epoxygruppen, an aromatischen Strukturen, sowie Viskositäten in einem bestimmten Bereich aufweisen. So sollte der Gehalt an Epoxid-Sauerstoff zwischen 0,02 und 0,6 Gew.-% liegen. Im Epoxypolyester sollten 20–35 Gew.-%, bevorzugt 22–30 Gew.-% der aromatischen Struktureinheiten

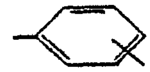

(Molgew. 76) bzw.

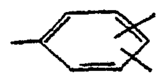

(Molgew. 75)

enthalten sein. Die Viskositäten der Epoxypolyester liegen bevorzugt in einem Bereich von 70–200 sec., gemessen nach DIN 53211 bei 20 °C an 70%igen Lösungen in N,N-Dimethylformamid.

Bei Einhaltung dieser Vorzugsbereiche können so besonders gut verarbeitbare Glasfaserstränge erhalten werden, welche sich durch eine hohe

Strangintegrität bei geringer Klebrigkeit auszeichnen. Die erfindungsgemässen epoxygruppenhaltigen Polyester sind selbstemulgierend. Selbstverständlich kann der Dispergiervorgang durch Zugabe wassermischbarer organischer Lösungsmittel, durch Neutralisation der Restsäurezahl mit anorganischen oder organischen basischen Verbindungen oder durch Zusatz von Emulgatoren zusätzlich unterstützt werden, jedoch ist dieses Vorgehen nicht bevorzugt. Die Harze können durch Zugabe von entionisiertem Wasser in Dispersionen oder kolloidale Lösungen mit Festkörpergehalten von 60–5%, vorzugsweise 55–20% überführt werden.

Aus den wässrigen Dispersionen bzw. Lösungen der Epoxypolyesterharze, Haftvermittlern, Gleitmitteln und Hilfsstoffen, wie Netzmitteln oder Antistatika, werden auf übliche Weise die erfindungsgemässen Schlichten hergestellt, siehe K.L. Loewenstein: The Manufacturing Technology of Continuous Glass Fibers, Elsevier Scientific Publishing Corp. Amsterdam, London, New York (1973). Diese werden auf bekannte Weise, d.h. mit Hilfe geeigneter Vorrichtungen, wie z.B. Sprüh- oder Walzensystemen auf die mit hoher Geschwindigkeit aus Spinndüsen gezogenen Glasfilamente sofort nach ihrem Erstarren, d.h. noch vor dem Aufwickeln, aufgetragen. Es ist aber auch möglich, die Fasern im Anschluss an den Spinnprozess in einem Tauchbad zu beschlichten.

Die beschlichteten feuchten Glasfasern werden anschliessend bei Temperaturen von 90–160 °C getrocknet und dann zu Rovings, Matten, Geweben, Schnitt-, Kurzglas usw. verarbeitet. Unter Trocknung ist dabei nicht allein die Entfernung von Wasser und anderen flüchtigen Bestandteilen zu verstehen, sonders auch das Festwerden der Schlichtebestandteile, insbesondere des Filmbildners. Erst nach beendeter Trocknung hat sich die Schlichte in eine feste Überzugsmasse verwandelt.

Das Epoxypolyesterharz ist in einer erfindungsgemässen Schlichte in einer Menge von 0,6–12 Gew.-%, berechnet als Feststoff, enthalten. Konzentrationen unter 0,6 Gew.-% geben nur einen ungenügenden Schutzfilm auf den Glasfasern. Höhere Konzentrationen als 12. Gew.-% ergeben zu dicke Überzugsschichten, die zu einer Schwächung des aus derartig beschlichteten Glasfasern hergestellten Glasfaser-Polymer-Verbundwerkstoffes führen. Ausserdem empfiehlt es sich aus Kostengründen nicht, noch grössere Mengen Filmbildner auf die Faser aufzubringen. Vorzugsweise wird die Konzentration des Epoxypolyesterharzes in einer erfindungsgemässen Schlichte zwischen 1,0 und 7 Gew.-%, bezogen auf Feststoff, gewählt. Der Auftrag einer solchen Schlichte führt erfahrungsgemäss zu einer Beladung der getrockneten Fasern mit Schlichtebestandteilen, d.h. zu einem Schlichtegehalt von etwa 0,2–2 Gew.-%, bezogen auf beschlichtete Fasern, wobei der Filmbildner mengemässig in der Regel überwiegt. Schlichtegehalte in dem genannten Bereich werden sowohl vom technischen Standpunkt als auch aus wirtschaftlichen Überlegungen für die erfindungsgemäss beschlichteten Glasfasern für die Verstärkung von ungesättigten Polyesterharzen und Epoxyharzen, aber auch von Thermoplasten, als optimal angesehen. Selbstverständlich können den erfindungsgemässen Schlichten auch noch weitere Filmbildner, wie z.B. vom Polyurethantyp. vom Polyvinylacetat-Typ oder vom Polyestertyp beigemengt werden.

Die Konzentration des Silan-Haftvermittlers (wie z.B. Vinyltrimethoxysilan, Vinyltriethoxysilan, Vinyl-tris-(β-methoxyethoxy)-silan, γ-Methacryloxypropyltrimethoxysilan, γ-Methacryloxypropyl-tris-(β-methoxyethoxy)-silan, γ-Glycidoxypropyl-trimethoxysilan, β-(3,4-Epoxycyclohexyl)-ethyltrimethoxysilan) in den erfindungsgemässen Schlichten beträgt 0,05–1,5 Gew.-%, vorzugsweise jedoch 0,15–0,85 Gew.-%, bezogen auf die gesamte Schlichte. Konzentrationen über 1,5 Gew.-% sind einerseits wegen der Bildung relativ dicker Silikonschichten auf den Glasfasern, die bekannterweise den Verbund zwischen den Glasfasern und dem zu verstärkenden Kunststoff eher schwächen als verbessern, unerwünscht, und andererseits wegen der technisch schwer zugänglichen und daher kostspieliegen Silane auch unwirtschaftlich. Bei Konzentrationen unter 0,05 Gew.-% ist die Wirksamkeit der Silan-Haftvermittler im allgemeinen nicht ausreichend. Konzentrationen zwischen 0,05 und 0,15 Gew.-% werden dann gewählt, wenn das Aufbringen der Schlichte auf die Glasfasern nicht während des Spinnprozesses, d.h. in Bruchteilen einer Sekunde, sondern beispielsweise durch Tränkung der Glasfasern in einem Schlichtebad erfolgt, was aus praktischen Gründen weitaus längere Zeit erfordert, in welcher eine wesentlich höhere Ausnutzung der Schlichte möglich ist, als beim Auftrag der Schlichte während des Spinnprozesses.

Die erfindungsgemässen Schlichten enthalten nicht ionische oder/und kationische Gleitmittel, die z.B. aus folgenden Stoffgruppen bestehen können:

Polyalkylenglykolether von Fettalkoholen oder Fettaminen, Polyalkylenglykolester und Glycerinester von Fettsäuren mit 12–18 C-Atomen, Polyalkenylglykole, höhere Fettsäureamide mit 12–18 C-Atomen von Polyalkylenglykolen und/oder Alkenylaminen, quartäre Stickstoffverbindungen z.B. ethoxylierte Imidazoliniumsalze, Mineralöle, Wachse.

Das Gleitmittel wird vorteilhaft allein oder in Kombination mit anderen in einer Gesamtkonzentration zwischen 0,05 und 1,5 Gew.- %, bezogen auf die gesamte Schlichte, angewendet.

Daneben können die Schlichten noch Antistatika, wie z.B. Lithiumchlorid, Ammoniumchlorid, Cr-III-Salze, organ. Titanverbindungen, Arylalkylsulfate oder -sulfonate, Arylpolyglykolethersulfonate oder quartäre Stickstoffverbindungen, enthalten. Sie werden allein oder in Kombination miteinander vorteilhaft in Konzentrationen von 0,01 bis 0,8 Gew.-% angewendet.

Zur Herstellung der erfindungsgemäss beschlichteten Glasfasern sind sowohl die für die Glasseidenfabrikation verwendeten, bekannten

Glastypen, wie E-, A-, C- und S-Glas, als auch die bekannten Glasstapelfasererzeugnisse geeignet. Unter den genannten Glastypen für die Herstellung von Endlosglasfasern besitzen die E- Glasfasern die grösste Bedeutung für die Verstärkung von Kunststoffen. Denn im Gegensatz zu A- und C-Glas ist E-Glas nahezu alkalifrei, woraus sich seine guten Elektroisolier-Eigenschaften und seine höhere Beständigkeit bei Einwirkung von Wasser oder Alkalien ableitet. Auch bezüglich der Zugfestigkeit und des Elastizitätsmoduls sind E-Glasfasern den A-Glasfasern überlegen.

Die mit den erfindungsgemässen Glasfasern verstärkten Verbundstoffe können hergestellt werden, indem man die beschlichteten Glasfäden von ungesättigten Polyesterharzen oder Epoxidharzen mit flüssigen Reaktionsharzmassen, die gegebenenfalls Lösungsmittel und/oder andere Zusätze enthalten können, in Tränkbädern, Formen oder durch Sprühen imprägniert und anschliessend gegebenenfalls unter Formgebung in den gehärteten Zustand überführt. Unter Reaktionsharzmassen versteht man verarbeitungsfertige Mischungen aus Reaktionsharzen und Reaktionsmitteln. Reaktionsharze sind flüssige oder schmelzbare Stoffe, die nach Zugabe der Reaktionsmittel, gegebenenfalls unter zusätzlicher Wärmezufuhr, in hochmolekulare, meist vernetzbare Produkte umgewandelt werden.

Neben den bereits aufgeführten Reaktionsmassen von ungesättigten Polyesterharzen und Epoxidharzen können gegebenenfalls auch andere gebräuchliche duroplastische oder thermoplastische Kunststoffe, wie z.B. Phenol-Formaldehyd-Harze, Polyurethane, Polycarbonate, Polyamid, Polybutylenterephthalate, Polyethylenterephthalate und Polyolefine mit den erfindungsgemäss beschlichteten Glasfasern zu glasfaserverstärkten Formkörpern umgesetzt werden. Die Einarbeitung der Glasfasern erfolgt bei den thermoplastischen Kunststoffen z.B. in Form von Schnittglas (chopped strands, «chops»), das in Extrudern mit den aufgeschmolzenen Thermoplasten vermischt, zu Strängen gepresst und zu Kunststoffgranulat verarbeitet wird. Dieses Granulat dient als Ausgangsbasis zur Herstellung von Formteilen und Gegenständen aus glasfaserverstärktem thermoplastischem Kunststoff.

Die vorliegende Erfindung soll nun anhand der nachfolgenden Ausführungsbeispiele noch näher erläutert werden.

**Beispiel 1**

Herstellung des Epoxypolyesterharzes A

Aus 3117,9 g eines mit insgesamt 5,5 Mol Propylenoxid pro Mol Substanz alkoxylierten Bisphenol A, 300,1 g Polyethylenglykol mit einem mittleren Molekulargewicht von 1000 und 525,5 g Adipinsäure wird in einer Stickstoffatmosphäre durch Veresterung bei 190–230 °C bis zu einer Säurezahl von ungefähr 16 ein Polyesterharz hergestellt, welches in einer angeschlossenen zweiten Stufe mit 227,8 g eines Epoxyharzes mit einem Epoxyäquivalent von 190 in Gegenwart von 0,24 g Tetrabutylammoniumjodid bei 140 °C bis zu einer Säurezahl von 6 zum Epoxypolyester umgesetzt wird. Dieses Produkt enthält ca. 0,23% Epoxid-Sauerstoff. Zur Dispergierung legt man 4061,3 g destilliertes Wasser vor und trägt das Harz bei 30–40 °C Harztemperatur unter Rühren ein. Anschliessend wird über ein 30000 mesh-Maschensieb filtriert. Der Festkörper der entstehenden Dispersion beträgt ca. 50%.

b) Zusammensetzung der erfindungsgemässen Schlichte

| | |
|---|---|
| Epoxypolyesterharz A (50% Feststoff) | 5,50 Gew.-% |
| γ-Methacryloxypropyl-trimethoxysilan | 0,40 Gew.-% |
| β-(3,4-Epoxycyclohexyl)-ethyl-trimethoxysilan | 0,25 Gew.-% |
| Stearinsäureamid-Paste (20% Feststoff) | 1,5 Gew.-% |
| Polyethylenoxid, Molgewicht 4000 | 0,15 Gew.-% |
| Polyvinylpyrrolidon | 0,10 Gew.-% |
| Nonylphenol-polyglykolether-sulfat, Na-Salz | 0,12 Gew.-% |
| Rest Wasser | |

c) Herstellung der Schlichte

In einem Mischbehälter wird ca. 2/3 der Gesamtmenge Wasser vorgelegt und mit Essigsäure auf pH 3,5 angesäuert. Das γ-Methacryloxypropyl-trimethoxysilan wird zugegeben und ca. 15 Min. bis zur kompletten Hydrolyse angerührt. Nun wird der pH-Wert mit Ammoniakwasser auf 4,5–5,0 eingestellt, das β-(2,3-Epoxycyclohexyl)-ethyl-trimethoxysilan zugegeben und ebenfalls ca. 15 Min. hydrolysiert. Danach fügt man zuerst die Epoxypolyesterdispersion, dann die übrigen Zusätze unter gutem Rühren zu. Nach Zugabe der restlichen Wassermenge weist die Schlichte einen pH-Wert von ca. 5 auf.

d) Prüfung der Verstärkungswirkung der erfindungsgemäss beschlichteten Glasfasern in ungesättigtem Polyesterharz:

Zur Herstellung der Prüfkörper werden die beschichteten und 10 Stunden bei 130 °C getrockneten Glasfasern in Form von Roving-Strängen (2.400 tex) in paralleler Lage mit der 60%igen styrolischen Lösung eines ungesättigten Polyesterharzes imprägniert und dann mit konstanter Geschwindigkeit in ein mit Teflon beschichtetes Glasrohr eingezogen. Das imprägnierende Harz ist ein ungesättigtes Polyesterharz auf der Grundlage von Oligo-Propylenglykolphthalatmaleaten. Das im Teflonrohr befindliche Material wird auf bekannte Weise mittels Benzoylperoxid gehärtet. Man erhält so unidirektional verstärkte, ca. 6 mm dicke und 80 mm lange Rundstäbe (DIN-Entwurf 53 390). Der Glasfaseranteil beträgt 60 Gew.-%. An 10 derartigen Prüfkörpern wird nach DIN 53 454 die Druckfestigkeit (Biegefestigkeit) als Mittelwert der 10 Messungen bestimmt. Nach 6-stündiger Behandlung in siedendem Wasser bestimmt man den prozentualen Abfall der Biegefestigkeit an weiteren 10 Prüfkörpern gegenüber den gemittelten Trockenbiegefestigkeitswerten. Dieser prozentuale Abfall der Biegefestigkeit ist ein Mass für die in der Praxis der glasfaserverstärkten Kunststoffe besonders wichtige Erhaltung der gewünschten mechanischen Festigkeit der Verbundwerkstoffe bei bzw. nach Einwirkung von Wasser bzw. bei Bewitterung.

Trockenbiegefestigkeit $6_{bB}$ : 1363 N/mm²

Prozentualer Abfall der Biegefestigkeit $\frac{100 \cdot \Delta 6_{bB}}{6_{bB}}$ : 13,5%

e) Verarbeitungseigenschaften eines aus den erfindungsgemäss beschlichteten Glasfasern hergestellten Rovings (2.400 tex):

An den beschichteten Glasfasern wurden Eigenschaften wie Integrität der Fäden und Stränge, mechanische Festigkeit und Aussehen der Glasfaserlagen auf dem Cake, Schlichtewanderung, Verfärbungen der Fäden, Abriebfestigkeit und Flusen beim Aufwickeln zu Rovings, Verschmutzungsgrad aller Apparateteile, welche die Glasfasern umlenken oder umwenden und, falls erforderlich, die Schneidbarkeit des Glasfaserfadens oder des Rovingstranges beurteilt.

Mit der über 48 Stunden stabilen Schlichte nach Beispiel 1 beschichtete Glasfasern mit einem Schlichteauftrag von 0,46 Gew.-% lassen sich gut herstellen und zu Rovings verarbeiten. Der Rovingstrang zeigt einen guten Zusammenhalt der ihn bildenden Glasfaser, ist abriebfest und ist nicht gelblich oder bräunlich verfärbt. Der weiche, schmiegsame Rovingstrang ist gut für eine Verarbeitung nach dem Wickelverfahren geeignet.

Beispiel 2

a) Herstellung des Epoxypolyesterharzes B

3036,0 g eines mit insgesamt 5,5 Mol Propylenoxid pro Mol Substanz alkoxylierten Bisphenol A, 450,0 g Polyethylenglykol mit einem mittleren Molekulargewicht von 1000 und 525,6 Adipinsäure werden in einer Stickstoffatmosphäre bei 190–230 °C unter Wasserabspaltung bis zu einer Säurezahl von 15,5 verestert. Anschliessend fügt man 765,6 g eines Epoxyharzes mit einem Epoxyäquivalent von ca. 640, sowie 0,44 g Tetrabutylammoniumjodid zu und setzt bei 140 °C bis zu einer Säurezahl von 5 zum Epoxypolyester um. Das Harz enthält ca. 0,24% Epoxid-Sauerstoff. Zur Dispergierung legt man das Harz bei ca. 40 °C vor und gibt unter gutem Rühren die gleiche Gewichtsmenge Wasser in 6 Portionen innerhalb von 75 Minuten zu. Die Portionen umfassen zunächst dreimal je ²/₁₅, danach dreimal ³/₁₅ der Gesamtmenge Wasser. Anschliessend wird über ein 30 000 mesh-Maschensieb filtriert. Der Festkörper der entstandenen Dispersion beträgt. ca. 50%.

b) Zusammensetzung der erfindungsgemässen Schlichte:
analog Beispiel 1 mit 5,50 Gew.-% Epoxypolyesterharz B (50% Feststoff).

c) Herstellung der Schlichte:
analog Beispiel 1.

d) Prüfung der Verstärkungswirkung der erfindungsgemäss beschlichteten Glasfasern in ungesättigtem Polyesterharz:

Es werden dieselben Tests wie beim Beispiel 1 durchgeführt.

Trockenbiegefestigkeit $6_{bB}$ : 1375 N/mm²

Prozentualer Abfall der Biegefestigkeit $\frac{100 \cdot \Delta 6_{bB}}{6_{bB}}$ : 8,4%

e) Verarbeitungseigenschaften eines aus den erfindungsgemäss beschlichteten Glasfasern hergestellten Rovings (2.400 tex):

Die Schlichte ist mehr als 48 Stunden stabil. Die Glasfasern mit einem Schlichteauftrag von 0,38 Gew.-% lassen sich gut herstellen und zu Rovings verarbeiten. Der Rovingstrang zeigt einen guten Zusammenhalt der ihn bildenden Glasfaserfäden und ist abriebfest. Der weiche, schmiegsame Strang ist gut für eine Verarbeitung nach dem Wickelverfahren geeignet.

Beispiel 3

a) Herstellung des Epoxypolyesterharzes C

3117,9 g eines mit insgesamt 5,5 Mol Propylenoxid pro Mol Substanz alkoxylierten Bisphenol A, 300,0 g Polyethylenglykol mit einem mittleren Molekulargewicht von 1000 und 704,4 g Adipinsäure werden in einer Stickstoffatmosphäre bei 190–230 °C unter Wasserabspaltung bis zu einer Säurezahl von 5,0 verestert. Nun setzt man 250,8 g Tetrahydrophthalsäureanhydrid zu und lässt bei 140 °C bis zur Halbesterstufe, d.h. einer Säurezahl von 26,5, reagieren. Schliesslich wird 524,4 g eines Epoxyharzes auf Basis Bisphenol A des Epoxy-Äquivalentgewichtes 190 sowie 0,50 g Tetrabutylammoniumjodid zugegeben und bei 140 °C bis zu einer Säurezahl von 7,5 umgesetzt. Das Harz enthält ca. 0,49% Epoxid-Sauerstoff.

Zum Dispergieren wird das Harz bei 60 °C vorgelegt und unter gutem Rühren pro kg Epoxypolyesterharz 107,9 g einer 10%igen wässrigen Lösung von N,N-Dimethylethanolamin zugetropft. Pro kg reinem Epoxypolyesterharz verdünnt man dann portionsweise zunächst mit drei Portionen entionisiertes Wasser à 176,5 g, danach mit drei Portionen entionisiertes Wasser à 353,0 g und zuletzt mit 529,4 g entionisiertes Wasser bis zu einem Dispersionsfestgehalt von ca. 31%.

Aus 5,0 Gew.-% dieses Filmbildners, 0,5 Gew.-% Aminopropyltriethoxysilan und 0,5 Gew.-% eines Propylenoxid/Ethylenoxid-Blockcopolymerisats wird, analog dem bei Beispiel 1 beschriebenen Verfahren, eine Schlichte hergestellt.

Auf Basis dieser Schlichte lassen sich chopped strands mit guten Verarbeitungseigenschaften, wie niedrigem Schüttvolumen und guter Rieselfähigkeit, erhalten. Mit diesen chopped strands verstärkte Thermoplaste, wie z.B. Polybutylenterephthalat oder Polypropylen, weisen gute mechanische Eigenschaften auf. Dieses Beispiel zeigt die Verwendbarkeit der erfindungsgemässen wässrigen Schlichten bei der Fertigung glasfaserverstärkter thermoplastischer Werkstoffe.

Vergleichsversuch A:

Aus 444 g Phthalsäureanhydrid, 138 g Ethanol und 2340 g eines Epoxyharzes aus Basis Bisphenol A, Epon 828, wurde nach der DE-A-1 496 630, Beispiel 8, ein Filmbildnerharz hergestellt. Dieses Harz ist jedoch nicht wasserdispergierbar.

Vergleichsversuch B:

Dieser Vergleichsversuch zeigt den ungünstigen Einfluss, den eine Verringerung bzw. eine Streichung des Polyethylenoxidgehaltes auf die Schlichteeigenschaften ausübt.

1969,2 g eines mit insgesamt 5,5 Mol Propylenoxid pro Mol Substanz alkoxylierten Bisphenol A und 547,2 g Tetrahydrophthalsäureanhydrid werden unter Rühren 30 Minuten bei 125 °C gehalten, bis die Säurezahl bei 79 liegt. Nun gibt man 1026,0 g eines Epoxyharzes auf Basis Bisphenol A mit einem Epoxyäquivalent von 190 zu, heizt eine halbe Stunde auf 125 °C, kühlt auf 105–110 °C ab und tropft langsam (innerhalb von 40 Minuten) 305,0 g Wasser zu. Dann erhöht man die Temperatur bis auf 130 °C und destilliert das nicht umgesetzte Wasser ab. Danach beträgt die Viskosität einer 70%igen Lösung des Harzes in Dimethylformamid (4 mm-DIN-Becher, 20 °C) 124 sec.; die Säurezahl des Harzes ist 23,5, die Hydroxylzahl 128, der Gehalt an restlichem Epoxy-Sauerstoff 0,75%.

Zur Dispergierung werden 512 g 10%ige wässrige Dimethylethanolaminlösung vorgelegt und 1250 g des 55–60 °C heissem Harzes eingerührt, bis die Mischung homogen ist. Nun werden 159,9 g-, 161,1 g-, 189,3 g-, 227,1 g-, 277,6 g-, 347,0 g-, 446,2 g-, 594,9 g- und 4164,2 g-Portionen von entionisiertem Wasser unter Rühren dazugemischt, bis der Feststoffgehalt der Dispersion ca. 15% beträgt. Analog dem Beispiel 1 wurde eine Schlichtezusammensetzung hergestellt. Auffällig sind störende Ablagerungen, welche sich bald in der wässrigen Schlichtezusammensetzung einstellen. Die Schlichte ist pH- und elektrolytinstabil. Damit beschlichtete Glasfasern mit einem Schlichteauftrag von 0,4 Gew.-% zeigen während der Verarbeitung der Cakefäden zu Glasfaserrovings ausserordentlich starkes Flusen, d.h. die Faser ist unzureichend geschützt. Die Steifigkeit der Faser liegt so hoch, dass das Produkt nicht mehr für das Wickelverfahren geeignet ist. Die Biegefestigkeit liegt bei 1280 N/mm$^2$, deren Abfall nach Behandlung in kochendem Wasser beträgt 13,4%.

Vergleichsversuch C:

1476,9 g eines mit insgesamt 5,5 Mol Propylenoxid pro Mol Substanz alkoxylierten Bisphenol A, 329,1 g 2,2-Bis-(4-(2-hydroxyethoxy)-phenyl)-propan, 360,0 g Polyethylenglykol mit einem mittleren Molekulargewicht von 1000 und 806,1 g Azelainsäure werden unter Wasserabspaltung und Durchleiten eines Stickstoffstromes bei 200 °C bis zu einer Säurezahl von 15,5 verestert. Nun gibt man 228 g eines Epoxyharzes auf Basis Bisphenol A mit einem Epoxyäquivalent von 190 sowie 1,24 g Tetrabutylammoniumjodid zu und hält unter Rühren ca. 3 Stunden bei 140 °C, bis die Säurezahl einen Wert von etwa 6 erreicht hat. Die Hydroxylzahl beträgt nun 60, der Gehalt an Epoxid-Sauerstoff 0,71%.

Zur Dispergierung legt man das Harz bei 45–50 °C vor und gibt zunächst soviel 10%ige wässrige Dimethylethanolaminlösung zu, dass die Restsäurezahl gänzlich neutralisiert wird. Danach rührt man portionsweise Wasser zu, bis der Festgehalt der Dispersion ca. 3,5% beträgt. Dieser Filmbildner zeichnet sich durch einen kleineren als den erfindungsgemässen Gehalt an Polypropylenoxideinheiten aus. Analog der Schlichtezusammensetzung gemäss Beispiel 1 mit diesem Filmbildner beschlichtete Glasfasern sind nicht zu Rovings verarbeitbar. Die Glasfaserlagen des Cakes brechen leicht ein; der Glasfaserfaden ist stark filamentisiert. Die allgemein stark klebrige Konsistenz der Schlichte führt zu Verklebungen der Glasfasern mit dem «Umband», auf dem die Glasfaser beim Wickeln abgelegt wird.

Vergleichsversuch D:

2625,6 g eines mit insgesamt 5,5 Mol Propylenoxid pro Mol Substanz alkoxylierten Bisphenol A, 840 g eines Polypropylenglykols mit einem mittleren Molekulargewicht von 1000, 360 g Polyethylenglykol mit einem mittleren Molgewicht von 1000 und 597,6 Isophthalsäure werden unter Wasserabspaltung und Durchleiten von Stickstoff bei 200 °C bis zu einer Säurezahl von 14,5 verestert. Dann wird 228 g eines Epoxyharzes auf Basis Bisphenol A mit einem Epoxyäquivalent von 190 zugefügt und bei 140 °C gehalten, bis die Säurezahl auf 6,2 abgefallen ist. Die Hydroxylzahl beträgt nun 78, der Epoxid-Sauerstoffgehalt 0,26%. Die Dispergierung erfolgt analog dem Vergleichsversuch C, auf einen Festgehalt von 35%. Dieser Filmbildner zeigt sich durch einen höheren als der erfindungsgemässe Gehalt an Polypropylenoxideinheiten aus.

Eine gemäss Beispiel 1 mit diesem Filmbildner gefertigte Schlichte führt zu Glasfaserfäden mit einem Schlichteauftrag von 0,43 Gew.-%. Infolge zu starker Verklebung der Fäden untereinander ist das Material schlecht verarbeitbar. Die zu einem Cake aufgewickelten Glasfaserlagen brechen leicht ein.

Vergleichsversuch E:

Dieser Vergleichsversuch zeigt den Einfluss von Filmbildnerharzen, deren Polyethylenoxidblöcke nicht die erfindungsgemässen Molekulargewichtsbereiche aufweisen, auf die Schlichte- und Glasfasereigenschaften.

3282 g eines mit insgesamt 5,5 Mol Propylenoxid pro Mol Substanz alkoxylierten Bisphenol A und 900 g 4,7,10-Trioxa-tridecandisäure werden unter Rühren und Durchleiten von Stickstoff bei 200 °C verestert bis zu einer Säurezahl von 15,2. Nach Abfüllen und Zufügen von 228 g eines Epoxyharzes auf Basis Bisphenol A mit einem Epoxyäquivalent von 190 lässt man bei 140 °C bis zu einer Säurezahl von 4,2 reagieren. Die Hydroxyzahl beträgt 90, der Gehalt an Epoxysauerstoff 0,21%. Die Dispergierung erfolgt analog dem Vergleichsversuch C bis auf einen Festgehalt von ca. 40%.

Aus Schlichtezusammensetzung gemäss Beispiel 1 mit dem oben beschriebenen Harz als Filmbildner resultieren Glasfaserfäden, die nicht verarbeitbar sind. Der Faden ist sehr weich und sehr stark filamentisiert.

**Patentansprüche**

1. Wässrige Schlichtemittel für Glasfasern, welche als Filmbildner in Wasser emulgierbare, mit Polyethereinheiten und Epoxygruppen modifizierte Polyester enthalten, dadurch gekennzeichnet, dass die modifizierten Polyester 4 bis 13 Gew.-% Polyethylenoxideinheiten mit Molgewichten zwischen etwa 370 und 3000 und 25 bis 50 Gew.-% Polypropylenoxideinheiten mit Molgewichten von 116 bis etwa 2000 enthalten.

2. Wässrige Schlichtemittel gemäss Anspruch 1, dadurch gekennzeichnet, dass die Polyester durch Kondensation von 3–40 Gew.-% mehr als eine Epoxygruppe pro Molekül enthaltender Verbindungen mit 97–60 Gew.-% eines polyethermodifizierten Polyesters bis zu einem Restgehalt an Epoxysauerstoff von 0,02–0,7 Gew.-%, bevorzugt 0,05–0,5 Gew.-%, erhalten werden.

3. Wässrige Schlichtemittel gemäss Anspruch 1 oder 2, dadurch gekennzeichnet, dass die zur Herstellung des Filmbildners verwendeten Polyalkohole aliphatische, cycloaliphatische und/oder aromatische mehrwertige Alkohole mit 2 bis 6 an nichtaromatische C-Atome gebundenen alkoholischen Hydroxylgruppen und 2 bis 24 C-Atomen pro Molekül und Additionsprodukte von Alkylenoxiden mit 2 bis 10 C-Atomen pro Molekül bzw. reaktionsfähigen Lactonen und diesen Alkoholen sind.

4. Wässrige Schlichtemittel gemäss einem der Ansprüche 1 bis 3, dadurch gekennzeichnet, dass die zur Herstellung des Filmbildners verwendeten Dicarbonsäuren oder deren veresterungsfähige Derivate 4 bis 12 C-Atomen pro Molekül enthalten.

5. Wässrige Schlichtemittel gemäss einem der Ansprüche 1 bis 4, dass die mehr als eine Epoxygruppe pro Molekül enthaltenden Verbindungen ausgewählt werden aus einer oder mehreren der Gruppen mit Epichlorhydrin kondensierte Polyphenole, Glycidylester von Polycarbonsäuren, epoxidierte aliphatische oder cycloaliphatische mehrfache Olefine und/oder Glycidylderivate stickstoffhaltiger Heterocyclen.

6. Verfahren zur Herstellung von Glasfasern, dadurch gekennheichnet, dass auf die Glasfaser eine wässrige Schlichte gemäss einem der Ansprüche 1 bis 5 aufgebracht wird.

7. Mit einer dünnen Beschichtung auf ihren Oberflächen geschlichtete Glasfasern, dadurch gekennzeichnet, dass die Beschichtung auf der Faser mit einer Schlichte gemäss einem der Ansprüche 1 bis 5 erhalten wurde.

8. Glasfaserverbundwerkstoffe auf Basis von Epoxyharzen und/oder ungesättigten Polyesterharzen, dadurch gekennzeichnet, dass die Glasfasern mit einer Schlichte gemäss einem der Ansprüche 1–5 beschlichtet wurden.

9. Glasfaserverbundwerkstoffe auf Basis thermoplastischer Kunststoffe, dadurch gekennzeichnet, dass die Glasfasern mit einer Schlichte gemäss einem der Ansprüche 1 bis 5 beschlichtet wurden.

**Revendications**

1. Produits d'encollage aqueux pour fibres de verre qui contiennent comme agents filmogènes des polyesters émulsifiables dans l'eau, modifiés par des séquences polyéthers et des groupes époxy, caractérisés en ce que les polyesters modifiés contiennent 4 à 13% en poids de séquences oxyde de polyéthylène de poids moléculaires compris entre 370 et 3000 et 25 à 50% en poids de séquences oxyde de polypropylène de poids moléculaires compris entre 116 et 2000, incorporées par condensation.

2. Produits d'encollage aqueux selon la revendication 1, caractérisés en ce que les polyesters sont obtenus par condensation de 3 à 40% en poids de composés contenant plus d'un groupe époxy par molécule et 97–60% en poids d'un polyester modifié par un polyéther jusqu'à une teneur résiduelle en oxygène d'époxy de 0,02 à 0,7% en poids, de préférence de 0,05 à 0,5% en poids.

3. Produits d'encollage aqueux selon la revendication 1 ou 2, caractérisés en ce que les polyalcools aliphatiques, cycloaliphatiques et/ou aromatiques utilisés pour la préparation du filmogène sont des polyalcools ayant 2 à 6 groupes hydroxyles alcooliques liés à des atomes de carbone non aromatiques et 2 à 24 atomes de carbone par molécule et de produits d'addition d'oxydes d'alkylène ou de lactones réactives ayant 2 à 10 atomes de carbone par molécule avec ces alcools.

4. Produits d'encollage aqueux selon l'une des revendications 1 à 3, caractérisés en ce que les acides dicarboxyliques ou leurs dérivés estérifiables utilisés pour la préparation du filmogène contiennent 4 à 12 atomes de carbone par molécule.

5. Produits d'encollage aqueux selon l'une des revendications 1 à 4, caractérisés en ce que les composés contenant plus d'un groupe époxy par molécule sont choisis parmi un ou plusieurs des groupes des polyphénols condensés avec l'épichlorhydrine, des esters de glycidyle d'acides polycarboxyliques, des polyoléfines aliphatiques ou cycloaliphatiques époxydées et/ou des dérivés de glycidyle d'hétérocycles azotés.

6. Procédé pour la préparation de fibres de verre, caractérisé en ce que l'on applique sur la fibre de verre une colle aqueuse selon l'une des revendications 1 à 5.

7. Fibres de verre encollées par un enduit mince sur leurs surfaces, caractérisées en ce que l'enduit est obtenu sur la fibre avec une colle selon l'une des revendications 1 à 5.

8. Articles composites de fibres de verre à base de résines époxy et/ou de résines de polyesters insaturées, caractérisés en ce que les fibres de verre ont été encollées avec une colle selon l'une des revendications 1 à 5.

9. Articles composites de fibres de verre à base de matières thermoplastiques, caractérisés en ce que les fibres de verre ont été encollées avec une colle selon l'une des revendications 1 à 5.

**Claims**

1. Aqueous sizing agents for glass fibres which contain as film formers polyesters which are emulsifiable in water and are modified with polyether units and epoxy groups, characterised in that the modified polyesters contain 4 to 13% by weight of polyethylene oxide units having molecular weights between about 370 and 3,000 and 25 to 50% by weight of polypropylene oxide units having molecular weights of 116 to about 2,000.

2. Aqueous sizing agents according to Claim 1, characterised in that the polyesters are obtained by condensation of 3–40% by weight of compounds containing more than one epoxy group per molecule with 97–60% by weight of a polyethermodified polyester up to a residual content of epoxy oxygen of 0,02–0,7% by weight, preferably 0,05–0,5% by weight.

3. Aqueous sizinq agents according to Claim 1 or 2, caracterised in that the polyalcohols used for the preparation of the film former are aliphatic, cycloaliphatic and/or aromatic polyhydric alcohols with 2 to 6 alcoholic hydroxyl groups bonded to non-aromatic C atoms and 2 to 24 C atoms per molecule and addition products of alkylene oxides with 2 to 10 C atoms per molecule or reactive lactones and these alcohols.

4. Aqueous sizing agents according to one of Claims 1 to 3, characterised in that the dicarboxylic acids or their esterifiable derivatives used for the preparation of the film former contain 4 to 12 C atoms per molecule.

5. Aqueous sizing agents according to one of Claims 1 to 4, in that the compounds containing more than one epoxy group per molecule are selected from one or more of the groups: polyphenols condensed with epichlorohydrin, glycidyl esters of polycarboxylic acids, epoxidised aliphatic or cycloaliphatic multiple olefins and/or glycidyl derivatives of nitrogen-containing heterocyclic compounds.

6. Process for the production of glass fibres, characterised in that an aqueous size according to one of Claims 1 to 5 is applied to the glass fibres.

7. Glass fibres sized on their surfaces with a thin coating, characterised in that the coating on the fibre has been obtained with a size according to one of Claims 1 to 5.

8. Glass fibre compound materials based on epoxy resins and/or unsaturated polyester resins, characterised in that the glass fibres have been sized with a size according to one of Claims 1–5.

9. Glass fibre compound materials based on thermoplastics, characterised in that the glass fibres have been sized with a size according to one of Claims 1 to 5.